# EUROPEAN PATENT APPLICATION

(11) **EP 3 815 561 A1**
(43) Date of publication of application: **05.05.2021**
(21) Application number: 20203027.6
(22) Date of filing: 21.10.2020
(51) Int. Cl.: A43B 5/00, A43B 23/16, B29D 35/00, B29D 35/14, B32B 1/00, B32B 25/10, B29C 43/14, B29C 43/18, B32B 38/18, B29D 35/08, B29C 70/34, A43B 3/00

(54) **SEMI-FINISHED PRODUCT FOR PORTIONS OF A SHOE AND METHOD FOR ITS PROVISION**

(30) Priority: 30.10.2019 IT 201900020020
(71) Applicant: RUBBERMAC.IT S.R.L., 33050 Gonars (UD) (IT)
(72) Inventor: FRASSON, Gianni, 35018 San Martino Di Lupari PD (IT); DE ROSSI, Alberto, 35015 Galliera Veneta PD (IT)
(74) Representative: Modiano, Micaela Nadia

(57) **Abstract**

A semi-finished product (10) for portions of a shoe (11) which comprises two layers:
- a first layer (13) made of rubber,
- a second layer (14) based on fibers, which is at least partially coupled to the first layer (13).

The first layer (13) is vulcanized directly in contact with the second layer (14).

## Description

The present invention relates to a semi-finished product for portions of a shoe such as, for example, the toe cap and/or the heel and/or single-piece portions that comprise toe cap and heel.

The invention also relates to a method for providing such a semi-finished product.

The term "semi-finished product" in the present description is used to mean an article, such as for example a heel and/or a toe cap and/or a portion of upper, prior to being joined to the rest of the shoe during the assembly of the latter.

The invention can be used in an industrial context, particularly in the footwear sector.

Nowadays particular types of shoes are widespread on the market which necessitate, especially in some specific portions, particular characteristics, for example mechanical strength and softness.

This is, for example, the case:
- with climbing shoes which require specific characteristics of softness for anchoring the sole to the wall to be climbed, especially in the heel region;
- with technical shoes and/or work shoes, which require characteristics of considerable mechanical strength and resistance to abrasion for the protection of the foot, especially in the region of the toe cap, but they also require softness in order to ensure an adequate level of comfort for the user.

There is therefore a market for makers of these shoe portions, for whom these are finished products which are sold to companies that manufacture shoes.

These portions are then associated, perhaps after a long time period, with the rest of the shoe by these shoe manufacturing companies, at sites that may be far away from the sites of production.

Usually, these heels and toe caps are made of rubber, individually, and they are later affixed to the upper by way of gluing in order to provide the shoe.

Such conventional techniques have a number of drawbacks.

In order to be able to obtain adequate characteristics of mechanical strength and resistance to abrasion, the thickness of the rubber can be of the order of 1.5 cm, but this results in reduced sensitivity for the foot, which makes anchoring to the ground/wall difficult.

Furthermore, in order to be capable of associating these heels/toe caps with the rest of the upper, generally a gluing is carried out.

Before the gluing operation, however, it is necessary to subject the raw heel/toe cap, i.e. the product obtained following vulcanization of the rubber, to an operation of carding and application of a primer in order to prepare the surface for gluing.

This results in a production process that is lengthy, costly and considerably polluting.

The aim of the present invention is to provide a semi-finished product for portions of a shoe which is capable of improving the known art in one or more of the above mentioned aspects.

Within this aim, an object of the invention is to provide a semi-finished product for portions of a shoe which do not necessitate carding operations and application of a primer in order to associate them with the upper.

Another object of the invention is to provide a semi-finished product for portions of a shoe which can be associated with the upper not only by way of gluing, but also by way of stitching.

A further object of the invention is to provide a semi-finished product for portions of a shoe which makes it possible, with the same mechanical strength, to reduce the thickness of the rubber, thus resulting in greater sensitivity for the foot and easier anchoring to the ground/wall as compared to what occurs with similar, conventional semi-finished products.

Another object of the invention is to provide a method for providing a semi-finished product for portions of a shoe which makes it possible to achieve the above mentioned objects.

A further object of the present invention is to overcome the drawbacks of the background art in an alternative manner to any existing solutions.

Another object of the invention is to provide a semi-finished product for portions of a shoe which is highly reliable, easy to implement and low-cost.

This aim and these and other objects which will become more apparent hereinafter are achieved by a semi-finished product for portions of a shoe, characterized in that it comprises two layers:
- a first layer made of rubber,
- a second layer based on fibers, which is at least partially coupled to said first layer,
said first layer being vulcanized directly in contact with said second layer.

Further characteristics and advantages of the invention will become more apparent from the detailed description that follows of a preferred, but not exclusive, embodiment of the semi-finished product for portions of a shoe, according to the invention, which is illustrated for the purposes of non-limiting example in the accompanying drawings wherein:
- Figure 1 shows a semi-finished product for portions of a shoe, according to the invention, in an application thereof;
- Figure 2 is a perspective view of a semi-finished product for portions of a shoe, according to the invention;
- Figure 3 is a cross-sectional view of the semi-finished product of Figure 2.

With reference to the figures, a semi-finished product for portions of a shoe according to the invention is generally designated by the reference numeral 10.

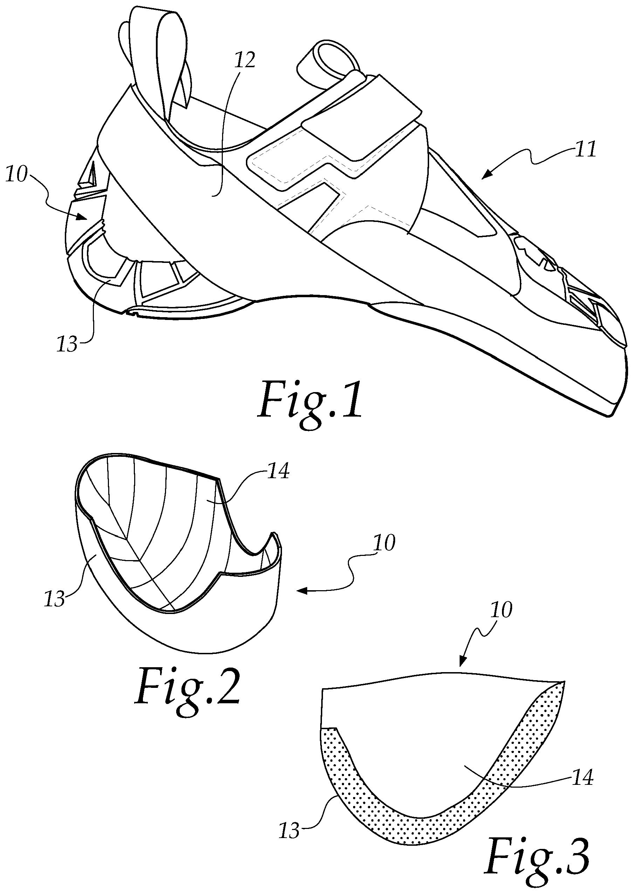

Figure 1 shows an application of the structure 10.

In this non-limiting example of application, the semi-finished product 10 is applied to a sport climbing shoe 11, and is associated with the upper 12.

In Figure 1, the semi-finished product 10 constitutes the heel of the shoe 11, however, in variations of embodiment, not shown in the figures, the semi-finished product 10 can constitute a toe cap and/or a portion of upper and/or a portion comprising toe cap and heel in a single piece and joined by connecting elements in the region corresponding to the plantar arch.

One of the particularities of the invention consists in that the semi-finished product 10 comprises two layers:
- a first layer 13 made of rubber,
- a second layer 14 based on fibers, which is at least partially coupled to the first layer 13.

Another of the particularities of the invention consists in that the first layer 13 is vulcanized directly in contact with the second layer 14.

The second layer 14 based on fibers is, for example, made of fabric and/or non-woven fabric (NWF) and has a thickness preferably comprised between 0.5 mm and 4.5 mm.

One NWF that can be used is, for example, the NWF known as PE/PA, which comprises fibers of polyethylene (PE) and polyamide (PA).

Another NWF that can be used is, for example, based on natural fibers.

The thickness of the first layer 13 can be less than 6 mm, if the semi-finished product 10 is, for example, the heel of a climbing shoe.

In particular, the second layer 14 is adapted to be directed toward the foot of the user, while the first layer 13 is adapted to be directed toward the outside of the shoe.

In this manner, the rigidity conferred by the second layer 14, which has a negligible elasticity with respect to the first layer 13, enables the shoe 11 to maintain better stability under torsion, with respect to similar shoes in which the heel is made completely of rubber, thus improving anchoring to the ground/wall.

Furthermore, in the semi-finished product 10, the use of a second layer 14 of fabric and/or NWF coupled to the first layer 13 makes it possible to obtain a mechanical strength that is comparable to similar semi-finished products made completely of rubber, but with lower thicknesses of the rubber layer.

In this manner, a greater sensitivity for the foot is also achieved, thus enabling easier anchoring to the ground/wall with respect to what occurs with similar, conventional semi-finished products, and also better comfort.

Also, the second layer 14 of fabric and/or NWF eliminates the need for carding operations and application of the primer for gluing to the upper 12, in that the second layer 14, being fabric and/or NWF, is by its nature adapted for gluing, being permeable to adhesives.

It should be noted that the presence of the second layer 14 of fabric and/or NWF also makes it possible to associate the semi-finished product 10 with an upper 12 by way of stitching, an operation not made possible with similar semi-finished products made completely of rubber.

Another of the particularities of the invention consists in its production process.

The method for providing a semi-finished product 10 according to the invention comprises the following steps:
- blanking one or more portions of fabric and/or NWF,
- shaping such portions of fabric and/or NWF, following a shape of the semi-finished product, for example after the stitching of different portions in order to prevent folds, thus obtaining a contoured portion of fabric and/or NWF, corresponding to the second layer 14,

- calendering and blanking a portion made of polymeric base material,
- shaping the portion made of polymeric base material, following a shape of the semi-finished product, obtaining a contoured portion of polymeric base material,
- inserting the contoured portion of polymeric base material into a first mold part, making it adhere to the walls of its impression,
- inserting the contoured portion of fabric and/or NWF into the contoured portion of polymeric material, obtaining a uniformly distributed superimposition of fabric and/or NWF on the contoured portion of polymeric base material,
- closing the mold, clamping a second mold part to the first mold part, with the second mold part being complementary to the first mold part and having a shape that duplicates the shape of the semi-finished product, which is intended to be inserted into the contoured portion of fabric and/or NWF,
- executing the vulcanization of the contoured portion of polymeric base material, thus obtaining the first layer 13 coupled to the second layer 14.

It should be noted that, during heating and/or vulcanization, the polymeric material of the first layer 13 softens and penetrates at least the surface of the fabric and/or NWF of the second layer 14, partially permeating it and becoming welded to it as it solidifies.

A variation of embodiment of the method for providing the semi-finished product 10 according to the invention comprises the following steps:
- blanking a portion of fabric and/or NWF,
- shaping such portion of fabric and/or NWF, following a shape of the semi-finished product, thus obtaining a contoured portion of fabric and/or NWF, corresponding to the second layer 14,
- calendering and blanking a portion made of polymeric base material,
- shaping the portion made of polymeric base material, following a shape of the semi-finished product, obtaining a contoured portion of polymeric base material,
- inserting the contoured portion of fabric and/or NWF into a first mold part which has a contour of the shape of the semi-finished product, making it adhere to such contour,
- inserting such contoured portion of polymeric material in such contoured portion of fabric and/or NWF, obtaining a uniformly distributed superimposition of polymeric base material on such fabric and/or NWF,
- closing the mold, clamping a second mold part to the first mold part, with the second mold part being complementary to the first mold part,
- executing the vulcanization of the contoured portion of polymeric base material, thus obtaining the first layer 13 coupled to the second layer 14.

In another variation of embodiment, the method involves the following steps:
- blanking a portion of fabric and/or NWF,
- inserting the polymeric base material into a first mold part, in its impression,
- closing the mold constituted by a first mold part and by a second mold part which is complementary to the first mold part, preforming the polymeric base material,
- opening the mold and inserting the portion of fabric and/or NWF between the first mold part and the second mold part, fixing the portion at the opposite ends so that it remains under tension on a plane that is at right angles to the direction of closure of the mold,
- closing the mold constituted by the first mold part and by a second mold part, preforming the plastic base material, the second mold part being complementary to the first mold part and the first mold part having a shape that duplicates the shape of the semi-finished product,
- executing the vulcanization of the polymeric base material, thus obtaining the first layer 13 coupled to the second layer 14.

As an alternative, the portion of fabric and/or NWF can be inserted between the first mold part and the second mold part, fixing the portion at the opposite ends so that it remains under tension on a plane that is at right angles to the direction of closure of the mold, immediately after inserting the polymeric base material into the first mold part, in its impression, since it is not necessary to preform the polymeric base material before the application of the portion of fabric and/or NWF.

In a further variation of embodiment of the method, prior to the step of inserting the contoured portion of polymeric base material into the first mold part, optional inserts are introduced, for example bearing the logo of a manufacturing company, which are adapted to be visible on the shoe.

In a further variation of embodiment, the first layer 14 is not made of rubber, but is made of another type of plastic material.

In such case there is no vulcanization, but the polymeric base material is heated in the mold in order to obtain the desired contour and be bonded to the layer of fabric and/or NWF.

In practice it has been found that the invention fully achieves the intended aim and objects by providing a semi-finished product for portions of a shoe which makes it possible, with the same mechanical strength and resistance to abrasion, to reduce the thickness of the rubber, thus resulting in greater sensitivity for the foot and easier anchoring to the ground/wall compared to what occurs with similar, conventional semi-finished products.

With the invention a semi-finished product for portions of a shoe has been devised which does not necessitate carding operations and application of a primer in order to associate them with the rest of the upper.

It should be noted that with the invention a semi-finished product for portions of a shoe is provided which can be associated with the rest of the upper not only by way of gluing, but also by way of stitching.

Finally, with the invention a method has been devised for providing a semi-finished product for portions of a shoe which is capable of achieving the above mentioned objects.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102019000020020 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A semi-finished product (10) for portions of a shoe (11), **characterized in that** it comprises two layers:
- a first layer (13) made of rubber,
- a second layer (14) based on fibers, which is at least partially coupled to said first layer (13),
said first layer (13) being vulcanized directly in contact with said second layer (14).

2. The semi-finished product (10) according to claim 1, **characterized in that** said second layer (14) is made of fabric and/or non-woven fabric (NWF).

3. The semi-finished product (10) according to one or more of the preceding claims, **characterized in that** said second layer (14) has a thickness preferably comprised between 0.5 mm and 4.5 mm.

4. A method for providing a semi-finished product (10) according to one or more of the preceding claims, **characterized in that** it comprises the following steps:
- blanking a portion of fabric and/or NWF,
- shaping said portion of fabric and/or NWF, following a shape of said semi-finished product, obtaining a contoured portion of fabric and/or NWF, said contoured portion of fabric and/or NWF corresponding to said second layer (14),
- calendering and blanking a portion made of polymeric base material,
- shaping said portion made of polymeric base material, following a shape of said semi-finished product, obtaining a contoured portion of polymeric base material,
- inserting said contoured portion of polymeric base material into a first mold part, making it adhere to the walls of its impression,
- inserting said contoured portion of fabric and/or NWF into said contoured portion of polymeric material, obtaining a uniformly distributed superimposition of fabric and/or NWF on the contoured portion of polymeric base material,
- closing the mold, clamping a second mold part to said first mold part, said second mold part being complementary to said first mold part, said second mold part having a shape that duplicates the shape of said semi-finished product, said shape of said semi-finished product being intended to be inserted into said contoured portion of fabric and/or NWF,
- performing the vulcanization of said contoured portion of polymeric base material, thus obtaining said first layer (13) coupled at least partly to said second layer (14).

5. A method for providing a semi-finished product (10) according to one or more of claims 1 to 3, **characterized in that** it comprises the following steps:
- blanking a portion of fabric and/or NWF,
- shaping said portion of fabric and/or NWF, following a shape of said semi-finished product, obtaining a contoured portion of fabric and/or NWF, said contoured portion of fabric and/or NWF corresponding to said second layer (14),
- calendering and blanking a portion made of polymeric base material,
- shaping said portion made of polymeric base material, following a shape of said semi-finished product, obtaining a contoured portion of polymeric base material,
- inserting said contoured portion of fabric and/or NWF into a first mold part, said first mold part having a contour of the shape of said semi-finished product, said contoured portion of fabric and/or NWF adhering to said contour,
- inserting said contoured portion of polymeric material in said contoured portion of fabric and/or NWF, obtaining a uniformly distributed superimposition of polymeric base material on said fabric and/or NWF,
- closing the mold, clamping a second mold part to said first mold part, said second mold part being complementary to said first mold part,
- performing the vulcanization of said contoured portion of polymeric base material, thus obtaining said first layer (13) coupled at least partly to said second layer (14).

6. A method for providing a semi-finished product (10) according to one or more of claims 1 to 3, **characterized in that** it comprises the following steps:
- blanking a portion of fabric and/or NWF,
- inserting said polymeric base material into a first mold part, in its impression,
- closing the mold constituted by said first mold part and by a second mold part, preforming said plastic base material, said second mold part being complementary to said first mold part, said first mold part having a shape that duplicates the shape of the semi-finished product,
- opening said mold and inserting said portion of fabric and/or NWF between said first mold part and said second mold part, fixing said portion at the opposite ends so that it remains under tension on a plane that is at right angles to the direction of closure of said mold,
- closing said mold, clamping said second mold part to said first mold part, said second mold part adhering to said portion of fabric and/or NWF,
- performing the vulcanization of said polymeric base material, thus obtaining said first layer (13) coupled at least partly to said second layer (14).

7. The method for providing a semi-finished product (10) according to claim 4 or 5 or 6, **characterized in that** it comprises a step of inserting inserts that are adapted to be visible on said shoe.
